# FASCICULE DE BREVET EUROPEEN

(11) **EP 1 861 971 B1**
(45) Date de publication et mention de la délivrance du brevet: **31.10.2018**
(21) Numéro de dépôt: 06743789.7
(22) Date de dépôt: 22.03.2006
(51) Int. Cl.: H04L 12/58

(54) **SYSTEME ET PROCEDE DE TRANSMISSION DE MESSAGES ENTRE UNE PLATEFORME ET UN ENSEMBLE DE TERMINAUX**
NACHRICHTENÜBERTRAGUNGSYSTEM UND VERFAHREN ZWISCHEN EINER PLATTFORM UND EINER GRUPPE VON ENDGERÄTEN
SYSTEM AND METHOD FOR TRANSMITTING MESSAGES BETWEEN A PLATFORM AND A SET OF TERMINALS

(30) Priorité: 22.03.2005 FR 0502802
(43) Date de publication de la demande: 05.12.2007
(73) Titulaire: Orange, 75015 Paris (FR)
(72) Inventeur: TARRAGO, Aline, F-92330 Sceaux (FR); COTTIN, François, F-75015 Paris (FR); SEILER, Michel, F-92200 Neuilly-sur-Seine (FR); HERIARD DUBREUIL, Sylvie, F-75008 Paris (FR); FALLETTA, Frédéric, F-94270 Le Kremlin-Bicetre (FR); CAMINONDO, Guy, F-72700 Rouillon (FR); VAN DER VOORT, Cyrille, F-92400 Courbevoie (FR); SAYD, Thierry, F-75011 Paris (FR); BARRY, Aïssatou, F-75020 Paris (FR)
(86) Numéro de dépôt international: PCT/FR2006/050247
(87) Numéro de publication internationale: WO 2006/100410

(56) Documents cités:
- US-A1- 2004 030 753
- US-A1- 2004 039 786
- US-B1- 6 321 267

## Description

La présente invention concerne un système et un procédé de transmission de messages à travers un réseau de télécommunications entre une plateforme de service et au moins un ensemble prédéfini de terminaux.

L'invention trouve une application particulièrement avantageuse dans le domaine de la transmission sécurisée et personnalisée de messages vers des terminaux destinataires à partir d'un dispositif de communication.

On connaît de l'état de la technique des moyens de redirection de messages, tels que les systèmes de transfert d'appels téléphoniques, qui permettent de rediriger vers un terminal prédéterminé un message reçu sur autre terminal.

Le document US2004/0039786 A1 décrit un système pour filtrer de façon automatique des messages selon importance et urgence desdits messages.

Cependant, ces moyens de redirection connus présentent en général l'inconvénient de rediriger systématiquement tous les messages sans tenir compte d'éventuelles conditions d'accès, comme le caractère personnel, confidentiel ou, au contraire, collectif des messages.

En ce sens, on peut évoquer les courriers distribués par voie postale parmi lesquels on peut distinguer :
- les courriers collectifs déposés dans les boîtes à lettres sans mention de leurs destinataires, comme des annonces publicitaires, qui sont accessibles par toutes personnes habilitées à ouvrir lesdites boîtes à lettres,
- les courriers personnels dont le contenu n'est accessible que par leur destinataire, même si l'existence même de ces courriers peut être connue des personnes habilitées à ouvrir les boîtes à lettres,
- les courriers confidentiels, généralement remis à leur destinataire en main propre, dont l'existence et le contenu ne sont connus que dudit destinataire.

On remarquera néanmoins que la distribution de ce type de courrier se fait en vrac, c'est-à-dire dans une même boîte, sans distinction de leurs différents destinataires, le tri étant effectué par les destinataires eux-même. De même, aucun contrôle du respect de la confidentialité n'est assuré.

Aussi, un problème technique à résoudre par l'objet de la présente invention est de proposer un procédé de transmission de messages à travers un réseau de télécommunications entre une plateforme de service et au moins un ensemble prédéfini de terminaux, qui permettrait de remédier aux inconvénients des systèmes existants et permettrait une redirection desdits messages uniquement vers leur(s) seul(s) destinataire(s) tout en tenant compte également de leurs conditions d'accès.

La solution au problème technique consiste, selon la présente invention, en ce que ledit procédé comprend les étapes consistant à :
- définir au moins un dispositif de communication inclus dans ledit ensemble de terminaux, ledit dispositif correspondant à un abonné à ladite plateforme de service et est associé audit ensemble de terminaux identifiés,
pour ledit dispositif de communication,
- recevoir de la plateforme au moins un message provenant au moins d'une entité émettrice référencée,
- transmettre à ladite plateforme au moins une instruction de transmission dudit message vers au moins un terminal destinataire appartenant audit ensemble identifié, ladite instruction de transmission incluant au moins un critère d'accessibilité à un message.

Selon l'invention, ledit ensemble de terminaux est prédéfini par au moins une entité gestionnaire dudit ensemble.

De même, l'invention prévoit que ledit critère d'accessibilité est défini par ladite entité gestionnaire.

Ainsi, le procédé conforme à l'invention permet la redirection de messages multimédia de toute nature (texte, audio, vidéo, audiovisuel, message court SMS (Short Message Service) ou MMS (Multimedia Message Service), images fixes ou animées, etc...) vers des terminaux de tout type (téléphones fixes ou mobiles, ordinateurs personnels ou PC (Personal Computer), ordinateurs portables, assistants numériques personnels ou PDA (Personal Digital Assistant), appareils de télévision, etc...) prédéfinis par l'entité gestionnaire de l'ensemble des terminaux. L'accès au système peut également être multiple, à partir d'un dispositif de communication particulier, par courrier électronique, par le réseau Internet, etc...

Le procédé, selon l'invention, tient compte également des conditions d'accès de chaque message puisque, conformément à l'invention, ledit critère d'accessibilité est une libre accessibilité au contenu dudit message, ou que ledit critère d'accessibilité est une accessibilité personnelle au contenu dudit message, ou encore que ledit critère d'accessibilité est une accessibilité confidentielle audit message.

Une caractéristique avantageuse du procédé selon l'invention consiste en ce qu'il comprend également une étape de filtrage dudit message par ladite plateforme.

Avantageusement, ladite étape de filtrage comprend une étape de vérification de référencement de ladite entité émettrice dudit message auprès dudit ensemble.

L'invention concerne également un système de transmission de messages à travers un réseau de télécommunications entre une plateforme de service et au moins un ensemble prédéfini de terminaux, caractérisé en ce que ledit système comprend au moins un dispositif de communication, inclus dans ledit ensemble de terminaux identifiés, apte à recevoir de la plateforme au moins un message provenant au moins d'une entité émettrice référencée, et à transmettre à ladite plateforme au moins une instruction de transmission dudit message vers au moins un terminal destinataire appartenant audit ensemble identifié, ladite instruction de transmission incluant au moins un critère d'accessibilité dudit terminal destinataire à un message.

Par ailleurs, il est prévu par l'invention que ladite plateforme comporte au moins un moyen de filtrage dudit message.

Plus précisément, ledit moyen de filtrage est un moyen de vérification de référencement de ladite entité émettrice dudit message auprès dudit ensemble. En particulier, ledit référencement est déterminé par ladite entité gestionnaire.

On comprend que, de cette manière, le système, objet de l'invention, permette d'éliminer tout message provenant d'une source non autorisée, à savoir non référencée. Les sources, ou entités émettrices, sont habilitées par référencement à l'initiative de l'entité gestionnaire elle-même, ce qui garantit une très grande sécurité de l'ensemble considéré de terminaux vis à vis de l'intrusion d'émetteurs de messages indésirables.

La description qui va suivre en regard des dessins annexés, donnés à titre d'exemples non limitatifs, fera bien comprendre en quoi consiste l'invention et comment elle peut être réalisée.

La figure 1 est un schéma d'un système de transmission de messages conforme à l'invention.

La figure 2 est un schéma détaillé de la plateforme du système de la figure 1.

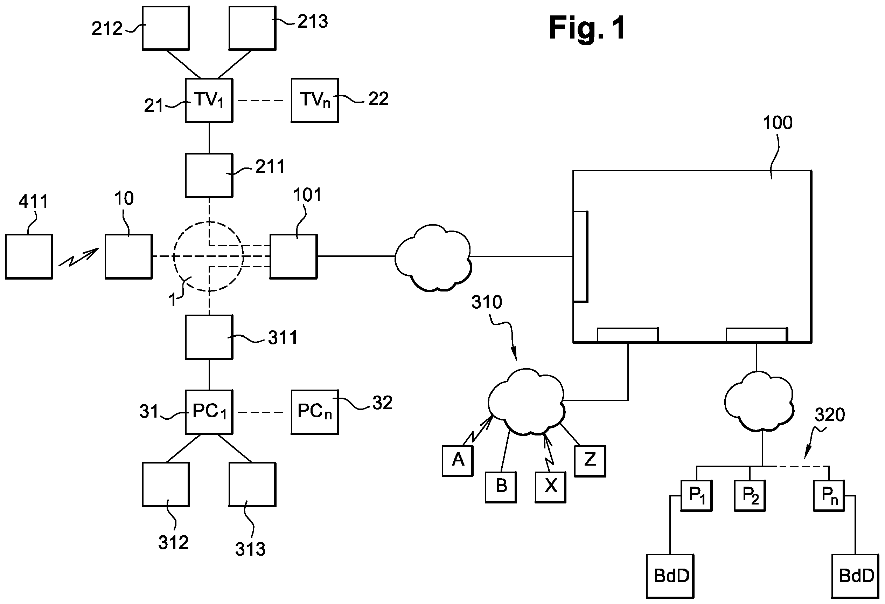

Sur la figure 1 est représenté un système de transmission de messages à travers un réseau de télécommunications entre une plateforme 100 et au moins un ensemble prédéfini de terminaux 10, 21, 22, 31, 32.

Comme le montre la figure 1, l'ensemble desdits terminaux forme un réseau local 1 qui peut être, par exemple, un réseau domestique dont les utilisateurs sont les membres d'une même famille, ou encore un réseau associatif, etc... Ce réseau, ou ensemble, est relié à la plateforme 100 à travers un réseau de télécommunications par une passerelle spécifique 101. La communication entre la plateforme 100 de service et l'ensemble de terminaux est réalisée via la passerelle 101 et l'interface de communication 190 par un câble haut débit, par exemple par transmission haut débit ADSL (Asymétrie Digital Subscriber Line). Les messages envoyés par la plateforme 100 vers l'ensemble de terminaux sont reçus sur un terminal particulier 10, dit dispositif de communication.

Dans le mode de réalisation de la figure 1, on trouve notamment parmi les terminaux constituant ledit ensemble, outre le dispositif 10 de communication, des terminaux 21, 31 équipés d'interfaces 211, 311 de communication, en émission et en réception, avec une liaison fixe ou une liaison radio courte distance telle que WiFi, WiMax, Bluetooth, etc... Il s'agit en particulier d'appareils de télévision 21, 22 ou d'ordinateurs personnels 31, 32, équipés éventuellement d'un microphone 212, 312 et d'une caméra 213, 313.

Des terminaux (non représentés) peuvent être également des ordinateurs portables, des assistants numériques personnels ou PDA (Personal Digital Assistant), etc... équipés d'une application compatible pour la communication avec ledit dispositif 10 de communication. D'autres terminaux, téléphones fixes ou mobiles peuvent être utilisés sans interface, car directement en liaison fixe ou mobile avec le dispositif 10 de communication.

L'ensemble des terminaux est prédéfini par une entité gestionnaire, qui peut être l'utilisateur du dispositif 10 de communication. Les terminaux dudit ensemble sont connus et référencés auprès de la plateforme 100. Ladite entité gestionnaire réalise le référencement de tous les terminaux constituant ledit ensemble. Ladite entité gestionnaire met en mémoire la liste des différents terminaux associés au dispositif 10 de communication. Pour chacun des terminaux est précisé le type de terminal (téléphones fixes ou mobiles, appareils de télévision 21, 22, ordinateurs personnels 31, 32, etc...). De même, sont référencés les différents utilisateurs de l'ensemble de terminaux, ainsi qu'au moins un terminal dudit ensemble affecté à chacun des utilisateurs.

Ensuite, l'entité gestionnaire identifie tous les terminaux de l'ensemble pour permettre une authentification non déclarative et automatique de chacun des terminaux. Chacun des terminaux de l'ensemble est identifié par une identification différente selon le type de terminal. En particulier, le dispositif 10 de communication est identifié par le numéro de téléphone fixe auquel il est raccordé par l'opérateur de télécommunications au moyen du câble de raccordement en paires de cuivre ou optiques. Un terminal mobile est par exemple identifié par une carte à mémoire, telle qu'une carte SIM (Subscriber Identity Module, ou module d'identification d'abonné) ou une carte USIM (Universal Subscriber Identity Module) ou une carte UICC (UMTS IC Card) ..., qui gère la sécurité dudit terminal grâce à des messages de signalisation opérateur transparents pour l'utilisateur, ou bien par un numéro MSISDN (Mobile Subscriber ISDN) du terminal mobile. Une carte à puce ou une carte UICC standardisée peut identifier chacun des terminaux référencés de l'ensemble, tel qu'un appareil de télévision 21, 22, un ordinateur personnel 31, 32, etc... Cette carte à mémoire peut être mise en place dans l'interface 211, 311 de communication du terminal.

L'authentification implicite peut être compatible avec les recommandations du consortium d'entreprises de Liberty Alliance ou bien des technologies d'authentification unique telle que Single Sign-On (ou SSO) ou toute autre authentification non déclarative.

L'entité gestionnaire dudit ensemble de terminaux peut être l'utilisateur du dispositif 10 de communication et identifié comme tel auprès de la plateforme 100 de service. Mais le référencement des terminaux et des utilisateurs peut être réalisé et mis en mémoire par l'opérateur qui gère la plateforme 100 de service. Une entité gestionnaire externe peut, par exemple, être chargée du référencement des différents ensembles de terminaux.

Une fois le référencement réalisé, lesdits terminaux de l'ensemble sont reconnus par la plateforme 100. Dès la mise en fonction d'un desdits terminaux, la plateforme 100 détecte la présence dudit terminal pour la prise en compte d'une redirection vers ledit terminal, par exemple à partir de la transmission de messages instantanés (tel que Instant Messaging).

Les messages transmis par la plateforme 100 au dispositif 10 de communication proviennent de différentes entités émettrices référencées qui, comme l'indique la figure 1, peuvent être les terminaux dudit ensemble ou bien des ensembles de terminaux différents (non représentés) ou encore les terminaux correspondant à des abonnés auprès de la plateforme 100.

Comme le représente la figure 1, lorsque des terminaux A, B, ..., X, Z dudit ensemble sont situés en dehors du réseau local 1, ils peuvent entrer en communication avec le dispositif 10 de communication par l'intermédiaire de la plateforme 100. Lesdits terminaux sont équipés d'une application compatible avec ladite plateforme 100 et le dispositif 10 de communication. Ils peuvent entrer en relation avec ladite plateforme 100 par l'intermédiaire de fournisseurs 310 d'accès (réseau mobile, réseau internet ou tout autre réseau de communication).

L'entité émettrice peut également être un prestataire 320 de services P1, P2, ..., Pn apte à fournir, par exemple, des services d'aide ou d'assistance aux personnes, tels que la police, des sociétés de maintenance ou de dépannage, des services de santé ou médicaux, des services administratifs telle que l'ANPE, des associations caritatives, etc... Lesdits prestataires peuvent être équipés d'un dispositif 10 de communication ou bien une application, compatible pour une communication avec la plateforme 100, est installée dans un équipement ou terminal dudit prestataire. Ladite application permet l'accès aux services et aux fonctionnalités de la plateforme 100, ainsi qu'aux dispositifs 10 de communication desdits ensembles.

Des messages peuvent également être émis à partir des différents terminaux dudit ensemble, y compris le dispositif 10 de communication, vers ledit ensemble de terminaux 10, 21, 22, 31, 32, ou vers les terminaux correspondant à des abonnés de la plateforme 100 ou bien vers des prestataires 320.

Tous lesdits dispositifs 10 de communication ou applications compatibles avec ladite plateforme 100 permettent l'accès aux informations mises en mémoire par la plateforme, tels que ledit ensemble de terminaux, lesdits critères d'accès... correspondant audit dispositif 10 de communication.

En dehors des abonnés auprès de ladite plateforme 100, l'accès vers d'autres entités ou d'autres services ou d'autres réseaux... est possible et entièrement libre, équivalent à un équipement de télécommunications habituel.

Après réception des messages provenant d'au moins une entité émettrice référencée via la plateforme 100, le dispositif 10 de communication dudit ensemble de terminaux transmet à la plateforme 100 des instructions relatives à la transmission desdits messages vers des terminaux destinataires appartenant audit ensemble identifié. Par exemple, le dispositif 10 de communication peut demander à la plateforme 100 de diffuser un contenu audiovisuel vers l'un des appareils 21, 31 de télévision. Il s'agit donc de la part du dispositif 10 de communication d'effectuer une redirection personnalisée des messages vers des terminaux reconnus par le système comme étant destinataires desdits messages.

De plus, l'entité gestionnaire prédéfini au moins une instruction de transmission des messages vers les terminaux en fonction du destinataire d'un message et de la nature des messages pouvant être reçus sur le terminal (texte, audio/sonore, audiovisuel, message court SMS ou MMS, etc...). Lesdites instructions de transmission des messages tiennent également compte d'au moins un critère d'accessibilité à un message.

Comme mentionné précédemment, le référencement des terminaux peut par exemple être réalisé par un opérateur en tant que l'entité gestionnaire, ainsi qu'une liste des instructions prédéfinies de transmission. L'utilisateur, comme autre entité gestionnaire, peut alors définir des critères d'accessibilité particuliers ou autres.

On peut envisager par exemple trois critères d'accessibilité à un message :
- une libre accessibilité à un message pour les messages dont le contenu est accessible collectivement par tous les utilisateurs. On citera à titre d'exemple une proposition de reportage audiovisuel diffusé par un fournisseur de contenus audiovisuels, avec participation simultanée à un débat.
- une accessibilité personnelle à un message dont le contenu n'est accessible que par le destinataire dudit message, comme une proposition de rendez-vous ou une offre d'emploi,
- une accessibilité confidentielle à un message dont l'existence et le contenu du message ne sont connus que par le destinataire dudit message, telle que la transmission à un patient des résultats d'un examen médical.

Les messages ayant une libre accessibilité sont accessibles librement à partir de tous les terminaux de l'ensemble et par tous les utilisateurs référencés. Lesdits messages sont dits messages "collectifs" car ils sont accessibles par tous les utilisateurs référencés dudit ensemble. En particulier, ils sont automatiquement diffusés dès la mise en fonction du dispositif 10 de communication. Par exemple, pour des messages vocaux, ils sont automatiquement diffusés vocalement en main libre par les haut-parleurs du dispositif 10 de communication et par conséquent sont audibles par tous les utilisateurs présents. Dans un autre mode de réalisation, un message vocal ou textuel dit "collectif' peut être redirigé vers un appareil 21, 22 de télévision référencé, qui diffuse déjà un message audiovisuel, soit en vocal sur les haut-parleurs soit avec un bandeau textuel sur l'écran de télévision pour une communication simultanée (vocale ou textuelle, en plus de la diffusion audiovisuelle). Une télécommande manuelle 411 permet également la redirection manuelle d'un message à partir du dispositif 10 de communication vers un terminal dudit ensemble.

Les messages ayant une accessibilité personnelle sont, en général, transmis vers le dispositif 10 de communication et/ou vers un terminal dit "personnel", référencé par l'entité gestionnaire comme destinataire d'un message personnel pour un utilisateur défini.

Les messages ayant une accessibilité confidentielle ne sont transmis que vers un terminal dudit ensemble, référencé comme le terminal dit "confidentiel" pour le destinataire du message.

De même que l'ensemble des terminaux associés au dispositif 10 de communication est prédéfini par l'entité gestionnaire dudit ensemble, au moins une instruction de transmission, incluant au moins un critère d'accessibilité des terminaux destinataires à un message, est également définie par ladite entité gestionnaire. Au moins un terminal est défini par l'entité gestionnaire comme terminal "personnel" pour un message dit "personnel" et comme terminal "confidentiel" pour un message dit "confidentiel" pour chacun des utilisateurs.

En outre, de manière à éviter la réception de messages provenant d'expéditeurs indésirables, la plateforme 100 de service comporte au moins un moyen de filtrage des messages. A cet effet, la plateforme 100 comporte au moins une base de données 140 dans laquelle sont référencées les entités émettrices accréditées, c'est-à-dire celles dont les messages seront transmis par la plateforme au dispositif 10 de communication, les messages provenant d'autres entités émettrices étant éliminés.

Le filtrage s'effectue donc en vérifiant le référencement des entités émettrices des messages dans au moins une base de données 140 de la plateforme 100 de service.

L'entité gestionnaire de l'ensemble des terminaux est également chargée de définir le référencement des entités émettrices auprès de la plateforme 100 de service.

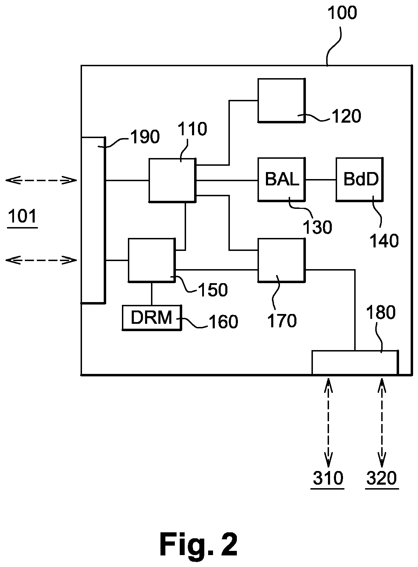

Conformément à la figure 2, la plateforme 100 de service est donc en charge des fonctionnalités suivantes, prises séparément ou en combinaison :
- organisation et administration, par exemple par au moins un module de gestion 110 et par au moins un module de boîte aux lettres (BAL) 130, d'au moins une instruction de transmission, en particulier d'au moins un critère d'accessibilité (libre accessibilité, accessibilité personnelle, accessibilité confidentielle) pour au moins un message provenant au moins d'une entité émettrice référencée, privée ou un partenaire professionnel, 310, 320, avec mise en oeuvre d'une redirection correspondante vers au moins un terminal de l'ensemble référencé par l'entité gestionnaire,
- pilotage et filtrage d'au moins une entité émettrice
- authentification non déclarative et automatique, sans intervention de l'utilisateur, de tous les terminaux et de leurs utilisateurs grâce au raccordement fixe par paires de cuivre, au raccordement mobile par cartes SIM ou numéros MSISDN, par cartes UICC, etc... par l'intermédiaire dudit module d'authentification 150,
- suivi en temps réel des communications, des présences et des redirections.

Ladite plateforme 100 de service permet également les fonctionnalités suivantes, prises séparément ou en combinaison :
- pilotage par ledit module de gestion 110 de toutes les entités gestionnaires abonnées auprès de la plateforme 100 et de tous les terminaux prédéfinis par chaque entité gestionnaire,
- accès aux services d'au moins une entité émettrice référencée, par exemple par l'intermédiaire des interfaces d'accès 180, d'au moins un module d'authentification 150 et d'un module d'accès 170,
- gestion par ledit module de gestion 110 de tous les accès quel que soit l'opérateur de réseau concerné et quel que soit le réseau d'accès (messages vocaux, messages courts SMS ou MMS par radio, courrier par messagerie électronique, réseau Internet, etc...) par l'intermédiaire d'au moins une interface de communication 190 et d'une interface d'accès 180,
- gestion de tous les droits d'accès, notamment les droits de propriété intellectuelle par l'intermédiaire d'un module 160 de DRM (Digital Rights Management, gestion des droits d'accès), qui contient les informations de gestion de droits et d'accès à des contenus transmis par les prestataires 320,
- sauvegarde de toutes les informations, par exemple par l'intermédiaire d'un module d'archivage 120 pour réaliser des statistiques, de manière à mesurer l'utilisation des services fournis,
- mise en mémoire dans au moins une base de données 140 des tables d'identification, de référencement, des instructions de transmission, en particulier des critères d'accessibilité à un message, des règles de gestion et de redirection, des tables d'utilisateurs.

Ledit dispositif 10 de communication est équipé au moins d'une interface utilisateur permettant la visualisation, par un écran tactile ou un écran/clavier, avec des moyens de diffusion audio et textuelle en émission et en réception, ledit dispositif 10 de communication étant apte à recevoir de la plateforme 100 au moins un message provenant d'au moins une entité émettrice référencée, privée ou professionnelle 310, 320, ainsi que pour l'accès aux services de la plateforme 100 de service.

Les principales fonctions dudit dispositif 10 de communication sont les suivantes, prises séparément ou en combinaison :
- interface pour l'accès à au moins un message compte tenu d'au moins un critère d'accessibilité audit message,
- interface(s) de communication avec les autres terminaux 21, 22, 31, 32 de l'ensemble,
- réception de communications simultanées en mode vocal ou textuel ou visiophonique (par exemple par l'intermédiaire des équipements de microphone 212, 312 et de caméra 213, 313),
- détection de proximité de terminaux, par exemple dans le cas d'un message confidentiel qui doit être diffusé sur un terminal mobile localisé dans la même cellule radio que ledit dispositif 10 de communication,
- détection de présence des utilisateurs des terminaux, par exemple par un dispositif biométrique qui détecte le contact de la main d'un des utilisateurs référencés pour la mise en fonction dudit dispositif 10 de communication et la diffusion automatique d'un message dit "collectif.

Ledit dispositif de communication permet également de commander la transmission des messages vers des appareils de télévision 21, 22, des ordinateurs personnels 31, 32, etc... et de recevoir des commandes par au moins une télécommande manuelle 411 pour la mise en fonction dudit dispositif 10 de communication ou la redirection manuelle d'un message à partir du dispositif 10 de communication vers un terminal dudit ensemble.

Lors du premier raccordement à la plateforme 100 de service, est défini au moins un dispositif 10 de communication inclus dans l'ensemble des terminaux et une entité gestionnaire dudit ensemble de terminaux.

Un procédé de transmission de messages mettant en oeuvre le système de la figure 1 comprend entre autres les étapes suivantes, prises séparément ou en combinaison, consistant à :
- connecter au moins une entité gestionnaire abonnée à la plateforme 100 de communication, en particulier par l'intermédiaire d'au moins un dispositif 10 de communication,
- reconnaître et authentifier le dispositif 10 de communication, par exemple par un module d'authentification 150 de la plateforme 100 au moyen d'une ligne de télécommunications identifiée pour le dispositif 10 de communication.

Notamment, la plateforme et le dispositif de communication permettent, séparément ou en combinaison, de :
- mettre en mémoire dans au moins une table indexée de la plateforme 100 la liste des différents utilisateurs de l'ensemble des terminaux associés au dispositif 10 de communication (nom, prénom, rôle ou fonction dans l'ensemble de terminaux) et la liste des différents terminaux de l'ensemble (téléphones fixes ou mobiles, appareils de télévision 21, 22, messagerie vocale ou textuelle, ordinateurs personnels 31, 32) raccordés de manière fixe ou mobile au réseau de télécommunications ou par des liaisons courte distance (WiFi, WiMax, Bluetooth ...),
- référencer les terminaux de l'ensemble pour chaque réception de message en fonction d'au moins une instruction de transmission, soit en fonction de la nature des messages (texte, audio/sonore, audiovisuel, message court SMS ou MMS, etc...), soit en fonction du critère d'accessibilité audit message (collectif, personnel ou confidentiel) défini par l'entité gestionnaire dudit ensemble de terminaux 10, 21, 22, 31, 32,
- identifier lesdits terminaux pour les authentifier automatiquement à chaque connexion (réception ou envoi d'un message) grâce à un identifiant différent selon chaque terminal et selon sa nature (numéro de téléphone fixe identifié par l'opérateur réseau au moyen du câble de raccordement en paires de cuivre ou optiques, terminal mobile identifié par la carte SIM et/ou le numéro MSISDN, chaque équipement référencé tel qu'un appareil de télévision 21, un ordinateur personnel 31... identifié par une carte à puce UICC standardisée identifiée, etc...).

En particulier, le dispositif 10 de communication permet, séparément ou en combinaison, de :
- recevoir ledit message, après avoir reconnu le critère d'accessibilité au message par la plateforme 100 pour définir le mode de diffusion et la visualisation dudit message,
- commander la réception avec la visualisation appropriée, après une mise en forme ou une conversion si nécessaire, en fonction de la nature du message et en fonction du critère d'accessibilité reconnu du message sur au moins un des terminaux référencés de l'ensemble après authentification non déclarative et automatique du ou des terminaux destinataires appartenant audit ensemble identifié.

De plus, la plateforme 100 de service comporte des moyens de vérification de référencement d'au moins une entité émettrice 310, 320, référencée, privée ou un partenaire professionnel, des différents messages auprès de chaque ensemble de terminaux, pour le filtrage desdits messages à transmettre par la plateforme 100 vers ledit ensemble 10, 21, 22, 31, 32.

Le système et le procédé, conforme à l'invention, permettent donc la gestion et la diffusion de messages multimédia de toute nature vers des terminaux 10, 21, 22, 31, 32 référencés et identifiés, après une authentification implicite et un filtrage automatique évitant tout message non autorisé et toute intrusion non souhaitée. La plateforme 100 de service gère l'organisation et l'administration des messages collectifs, personnels et confidentiels provenant d'utilisateurs privés ou professionnels, avec mise en oeuvre d'une redirection correspondante auprès des utilisateurs des terminaux de l'ensemble référencés par l'entité gestionnaire, permettant une interactivité et une interopérabilité de tous les terminaux et de tous les réseaux d'accès.

Les critères d'accessibilité à un message permettent un tri selon les instructions de transmission définies par une entité gestionnaire. Les messages dits "collectifs" sont diffusés en temps réel et permettent l'utilisation du dispositif 10 de communication en tant que boîte aux lettres interactive. La réponse à un message collectif est également diffusée vers tous les terminaux destinataires pour réaliser une réception en temps réel dès la mise en fonction des terminaux.

L'interface utilisateur du dispositif 10 de communication permet une visualisation spécifique et différente selon les critères d'accessibilité à un message. Par exemple, les messages collectifs peuvent être librement audibles dès la mise en fonction dudit dispositif 10 de communication. Ils peuvent également être visualisés sur l'écran dudit dispositif 10 de communication. Un message dit "personnel" n'est indiqué que par sa présence pour chaque utilisateur destinataire dudit message personnel. Une personnalisation différente peut être prévue en fonction du destinataire et de l'existence d'un message personnel. De même que pour la télécommande 411, des commandes sont prévues pour accéder aux messages et réaliser une redirection manuelle vers un des terminaux de l'ensemble, appareils de télévision 21, 22, ordinateurs personnels 31, 32, ou bien vers des applications particulières telles qu'une application vidéo par exemple.

## Revendications

1. Procédé de transmission de messages à travers un réseau de télécommunications entre une plateforme (100) de service et au moins un ensemble prédéfini de terminaux (10, 21, 22, 31, 32), ledit procédé comprend les étapes consistant à :
- définir au moins un dispositif (10) de communication inclus dans ledit ensemble de terminaux, ledit dispositif correspondant à un abonné à ladite plateforme (100) de service et étant associé audit ensemble de terminaux (10, 21, 22, 31, 32) identifiés, **caractérisé en ce que** ledit dispositif (10) de communication,
- reçoit de la plateforme (100) au moins un message provenant d'au moins d'une entité émettrice (310, 320) référencée,
- transmet à ladite plateforme (100) au moins une instruction de transmission dudit message vers au moins un terminal destinataire appartenant audit ensemble (10, 21, 22, 31, 32) identifié, ladite instruction de transmission incluant au moins un critère d'accessibilité à un message pour effectuer une redirection personnalisée des messages vers des terminaux reconnus par le système comme étant destinataires desdits messages.

2. Procédé selon la revendication 1, **caractérisé en ce qu'**il comprend également une étape de filtrage dudit message par ladite plateforme (100).

3. Procédé selon la revendication 1, **caractérisé en ce que** ladite redirection personnalisée est fonction du destinataire et de la nature du contenu dudit message.

4. Procédé selon l'une quelconque des revendications 1 à 3, **caractérisé en ce que** ledit ensemble de terminaux (10, 21, 22, 31, 32) est prédéfini par au moins une entité gestionnaire dudit ensemble.

5. Procédé selon l'une quelconque des revendications 1 à 4, **caractérisé en ce que** ledit critère d'accessibilité est une libre accessibilité au contenu dudit message.

6. Procédé selon l'une quelconque des revendications 1 à 5, **caractérisé en ce que** ledit critère d'accessibilité est une accessibilité personnelle au contenu dudit message.

7. Procédé selon l'une quelconque des revendications 1 à 6, **caractérisé en ce que** ledit critère d'accessibilité est une accessibilité confidentielle audit message.

8. Système de transmission de messages à travers un réseau de télécommunications entre une plateforme (100) de service et au moins un ensemble prédéfini de terminaux (10, 21, 22, 31, 32), ledit système comprend au moins un dispositif (10) de communication, inclus dans ledit ensemble de terminaux identifiés, **caractérisé en ce que** ledit dispositif (10) est apte à recevoir de la plateforme (100) au moins un message provenant au moins d'une entité émettrice (310, 320) référencée, et à transmettre à ladite plateforme (100) au moins une instruction de transmission dudit message vers au moins un terminal destinataire appartenant audit ensemble identifié, ladite instruction de transmission incluant au moins un critère d'accessibilité dudit terminal destinataire à un message pour effectuer une redirection personnalisée des messages vers des terminaux reconnus par le système comme étant destinataires desdits messages.

9. Système selon la revendication 8, **caractérisé en ce que** ladite plateforme (100) comporte au moins un moyen de filtrage dudit message.

10. Plateforme (100) comprenant les moyens de mise en oeuvre des étapes du procédé exécutées par ladite plateforme (100) selon les revendications 1 à 7, ladite plateforme (100) est configurée pour l'organisation et l'administration d'au moins un message collectif, personnel, confidentiel, en provenance d'au moins une entité émettrice (310, 320) référencée, avec mise en oeuvre d'une redirection correspondante auprès des utilisateurs des terminaux de l'ensemble référencés par l'entité gestionnaire, après au moins une authentification non déclarative et automatique de tous les terminaux (10, 21, 22, 31, 32) et des utilisateurs.

11. Dispositif (10) de communication comprenant les moyens de mise en oeuvre des étapes du procédé exécutées par ledit dispositif (10) selon les revendications 1 à 7, ledit dispositif (10) de communication comprenant au moins une interface pour l'accès à au moins un message compte tenu d'au moins un critère d'accessibilité audit message, et une interface de communication avec les autres terminaux (21, 22, 31, 32) de l'ensemble.

12. Dispositif (10) de communication selon la revendication 11, ledit dispositif étant configuré au moins pour la réception de communications simultanées en mode vocal ou textuel.

13. Dispositif (10) de communication selon les revendications 11 ou 12, ledit dispositif étant configuré au moins pour la détection de proximité de terminaux dans le cas d'un message confidentiel.

14. Dispositif (10) de communication selon l'une des revendications 11 à 13, ledit dispositif étant configuré au moins pour la détection de présence des utilisateurs des terminaux.

## Patentansprüche

1. Nachrichtenübertragungsverfahren über ein Telekommunikationsnetzwerk zwischen einer Dienstleistungsplattform (100) und mindestens einer vordefinierten Gesamtheit von Endgeräten (10, 21, 22, 31, 32),
wobei das Verfahren die folgenden Schritte umfasst, darin bestehend:
- mindestens eine Kommunikationsvorrichtung (10) zu definieren, die in die Gesamtheit von Endgeräten eingeschlossen ist, wobei die Vorrichtung einem Teilnehmer an der Dienstleistungsplattform (100) entspricht und der Gesamtheit von identifizierten Endgeräten (10, 21, 22, 31, 32) zugeordnet ist,
**dadurch gekennzeichnet, dass** die Kommunikationsvorrichtung (10)
- von der Plattform (100) mindestens eine Nachricht empfängt, die von mindestens einer bezeichneten Sendeeinheit (310, 320) kommt,
- an die Plattform (100) mindestens eine Übertragungsanweisung der Nachricht an mindestens ein Bestimmungsendgerät, das der identifizierten Gesamtheit (10, 21, 22, 31, 32) angehört, überträgt, wobei die Übertragungsanweisung mindestens ein Zugänglichkeitskriterium zu einer Nachricht einschließt, um eine personalisierte Umleitung der Nachrichten zu Endgeräten durchzuführen, die von dem System als Adressaten der Nachrichten erkannt werden.

2. Verfahren nach Anspruch 1, **dadurch gekennzeichnet, dass** es auch einen Schritt der Filterung der Nachricht durch die Plattform (100) umfasst.

3. Verfahren nach Anspruch 1, **dadurch gekennzeichnet, dass** die personalisierte Umleitung von dem Adressaten und der Natur des Inhalts der Nachricht abhängt.

4. Verfahren nach einem der Ansprüche 1 bis 3, **dadurch gekennzeichnet, dass** die Gesamtheit von Endgeräten (10, 21, 22, 31, 32) durch mindestens eine Verwaltungseinheit der Gesamtheit vordefiniert ist.

5. Verfahren nach einem der Ansprüche 1 bis 4, **dadurch gekennzeichnet, dass** das Zugänglichkeitskriterium eine freie Zugänglichkeit zum Inhalt der Nachricht ist.

6. Verfahren nach einem der Ansprüche 1 bis 5, **dadurch gekennzeichnet, dass** das Zugänglichkeitskriterium eine persönliche Zugänglichkeit zum Inhalt der Nachricht ist.

7. Verfahren nach einem der Ansprüche 1 bis 6, **dadurch gekennzeichnet, dass** das Zugänglichkeitskriterium eine vertrauliche Zugänglichkeit zu der Nachricht ist.

8. Nachrichtenübertragungssystem über ein Telekommunikationsnetzwerk zwischen einer Dienstleistungsplattform (100) und mindestens einer vordefinierten Gesamtheit von Endgeräten (10, 21, 22, 31, 32), wobei das System mindestens eine Kommunikationsvorrichtung (10) umfasst, die in die Gesamtheit von Endgeräten eingeschlossen ist, **dadurch gekennzeichnet, dass** die Vorrichtung (10) geeignet ist, von der Plattform (100) mindestens eine Nachricht zu empfangen, die von mindestens einer bezeichneten Sendeeinheit (310, 320) kommt, und an die Plattform (100) mindestens eine Übertragungsanweisung der Nachricht an mindestens ein Bestimmungsendgerät, das der identifizierten Gesamtheit angehört, zu übertragen, wobei die Übertragungsanweisung mindestens ein Zugänglichkeitskriterium des Bestimmungsendgeräts zu einer Nachricht einschließt, um eine personalisierte Umleitung der Nachrichten zu Endgeräten durchzuführen, die von dem System als Adressaten der Nachrichten erkannt werden.

9. System nach Anspruch 8, **dadurch gekennzeichnet, dass** die Plattform (100) mindestens ein Mittel zum Filtern der Nachricht umfasst.

10. Plattform (100), umfassend die Mittel für den Einsatz der Schritte des Verfahrens, die von der Plattform (100) ausgeführt werden, nach einem der Ansprüche 1 bis 7, wobei die Plattform (100) für die Organisation und die Verwaltung mindestens einer kollektiven, persönlichen, vertraulichen Nachricht, die von mindestens einer bezeichneten Sendeeinheit (310, 320) kommt, eingerichtet ist, bei Einsatz einer entsprechenden Umleitung bei den Benutzern der bezeichneten Endgeräte der Gesamtheit durch die Verwaltungseinheit nach mindestens einer nicht deklarativen und automatischen Authentifizierung aller Endgeräte (10, 21, 22, 31, 32) und der Benutzer.

11. Kommunikationsvorrichtung (10), umfassend die Mittel für den Einsatz der Schritte des Verfahrens, die von der Vorrichtung (10) ausgeführt werden, nach den Ansprüchen 1 bis 7, wobei die Kommunikationsvorrichtung (10) mindestens eine Schnittstelle für den Zugang zu mindestens einer Nachricht auf Basis mindestens eines Zugänglichkeitskriteriums zu der Nachricht und eine Kommunikationsschnittstelle mit den anderen Endgeräten (21, 22, 31, 32) der Einheit umfasst.

12. Kommunikationsvorrichtung (10) nach Anspruch 11, wobei die Vorrichtung zumindest für den Empfang von gleichzeitigen Kommunikationen im Vokal- oder Textmodus eingerichtet ist.

13. Kommunikationsvorrichtung (10) nach den Ansprüchen 11 oder 12, wobei die Vorrichtung zumindest für die Erfassung der Nähe von Endgeräten im Falle einer vertraulichen Nachricht eingerichtet ist.

14. Kommunikationsvorrichtung (10) nach einem der Ansprüche 11 bis 13, wobei die Vorrichtung zumindest für die Anwesenheitserfassung der Benutzer der Endgeräte eingerichtet ist.

## Claims

1. Method for transmitting messages over a telecommunications network between a service platform (100) and at least one predefined set of terminals (10, 21, 22, 31, 32),
said method comprising the steps consisting in:
- defining at least one communication device (10) included in said set of terminals, said device corresponding to a subscriber to said service platform (100) and being associated with said set of identified terminals (10, 21, 22, 31, 32),
**characterized in that** said communication device (10)
- receives from the platform (100) at least one message originating from at least one referenced sending entity (310, 320),
- transmits to said platform (100) at least one instruction to transmit said message to at least one receiving terminal belonging to said identified set (10, 21, 22, 31, 32), said transmission instruction including at least one criterion of accessibility to a message in order to carry out a personalized redirection of the messages to terminals recognized by the system as being intended recipients of said messages.

2. Method according to Claim 1, **characterized in that** it also comprises a step of filtering of said message by said platform (100).

3. Method according to Claim 1, **characterized in that** said personalized redirection is a function of the intended recipient and of the nature of the content of said message.

4. Method according to any one of Claims 1 to 3, **characterized in that** said set of terminals (10, 21, 22, 31, 32) is predefined by at least one manager entity of said set.

5. Method according to any one of Claims 1 to 4, **characterized in that** said criterion of accessibility is a free accessibility to the content of said message.

6. Method according to any one of Claims 1 to 5, **characterized in that** said criterion of accessibility is a personal accessibility to the content of said message.

7. Method according to any one of Claims 1 to 6, **characterized in that** said criterion of accessibility is a confidential accessibility to said message.

8. System for transmitting messages over a telecommunications network between a service platform (100) and at least one predefined set of terminals (10, 21, 22, 31, 32),
said system comprising at least one communication device (10), included in said set of identified terminals, **characterized in that** said device (10) is capable of receiving from the platform (100) at least one message originating from at least one referenced sending entity (310, 320), and of transmitting to said platform (100) at least one instruction to transmit said message to at least one receiving terminal belonging to said identified set, said transmission instruction including at least one criterion of accessibility of said receiving terminal to a message in order to carry out a personalized redirection of the messages to terminals recognized by the system as being intended recipients of said messages.

9. System according to Claim 8, **characterized in that** said platform (100) comprises at least one means of filtering of said message.

10. Platform (100) comprising the means for implementing the steps of the method that are executed by said platform (100) according to Claims 1 to 7, said platform (100) being configured for the organization and administration of at least one collective, personal, confidential message originating from at least one referenced sending entity (310, 320), with use of a corresponding redirection to the users of the terminals of the set that are referenced by the manager entity, after at least one nondeclarative and automatic authentication of all the terminals (10, 21, 22, 31, 32) and of the users.

11. Communication device (10) comprising the means for implementing the steps of the method that are executed by said device (10) according to Claims 1 to 7, said communication device (10) comprising at least one interface for gaining access to at least one message taking account of at least one criterion of accessibility to said message and a communication interface with the other terminals (21, 22, 31, 32) of the set.

12. Communication device (10) according to Claim 11, said device being configured at least for the reception of simultaneous communications in voice or text mode.

13. Communication device (10) according to Claims 11 or 12, said device being configured at least for the detection of proximity of terminals in the case of a confidential message.

14. Communication device (10) according to one of Claims 11 to 13, said device being configured at least for the detection of presence of the users of the terminals.
